# EUROPEAN PATENT SPECIFICATION

(11) **EP 4 296 422 B1**
(45) Date of publication and mention of the grant of the patent: **16.07.2025**
(21) Application number: 22774295.4
(22) Date of filing: 24.03.2022
(51) Int. Cl.: D06F 25/00, D06F 58/02, D06F 58/10

(54) **INTEGRATED WASHING AND DRYING DEVICE**
INTEGRIERTE WASCH- UND TROCKNUNGSVORRICHTUNG
DISPOSITIF DE LAVAGE ET DE SÉCHAGE INTÉGRÉ

(30) Priority: 25.03.2021 CN 202110321848
(43) Date of publication of application: 27.12.2023
(73) Proprietor: Qingdao Haier Washing Machine Co., Ltd., Qingdao, Shandong 266101 (CN); Haier Smart Home Co., Ltd., Qingdao, Shandong 266101 (CN)
(72) Inventor: LIU, Kai, Qingdao, Shandong 266101 (CN); XU, Sheng, Qingdao, Shandong 266101 (CN); LI, Wenwei, Qingdao, Shandong 266101 (CN); ZHAO, Zhiqiang, Qingdao, Shandong 266101 (CN)
(74) Representative: Patentwerk B.V.
(86) International application number: PCT/CN2022/082621
(87) International publication number: WO 2022/199640

(56) References cited:
- WO-A1-2018/082625
- WO-A1-2019/192879
- WO-A1-2021/228267
- CN-A- 102 560 986
- CN-A- 103 946 436
- CN-A- 109 137 426
- CN-B- 102 560 986
- CN-B- 105 603 677
- CN-U- 206 928 102
- CN-U- 213 740 119
- JP-A- 2016 165 368

## Description

### FIELD OF THE INVENTION

The present invention belongs to the technical field of washing and care, and specifically provides a washing-drying integrated apparatus.

### BACKGROUND OF THE INVENTION

A washing-drying integrated apparatus is a clothing treatment apparatus that can perform washing, rinsing, spinning and drying operations on clothing. Some washing-drying integrated apparatuses are further provided with functions such as air washing, disinfection, sterilization and fragrance enhancement.

Taking a drum type washing-drying integrated machine as an example, existing drum type washing-drying integrated machines include an outer cylinder and an inner cylinder. For example, both Chinese patent CN105603677B and published PCT patent application WO2019192879A disclose a washing-drying integrated machine. During washing, a certain amount of water is first injected into the outer cylinder, and then the inner cylinder drives the clothing to turn over, achieving washing of the clothing. The drum type washing-drying integrated machine is designed by imitating the principle of striking the clothing with a bar hammer. After the clothing is washed, the outer cylinder and a window gasket connected to the outer cylinder are both moist, that is, there is residual water on an inner wall thereof. After long term use, growth of bacteria is very likely to occur. In case of only opening door glass to dry the outer cylinder and the window gasket naturally, the effect would be very limited; moreover, the window gasket includes a wrinkle part, which is very unfavorable for the release of water vapor. During secondary use of the drum type washing-drying integrated machine by users, the bacteria and dirt on the inner wall of the outer cylinder and in the window gasket can easily cause secondary pollution to the clothing, seriously affecting the washing effect and resulting in poor user experience. Of course, the drum type washing-drying integrated machine also includes a drying system, which can be used to dry the outer cylinder and the window gasket by heating the residual water after the clothing is washed. However, all the drying systems of the drum type washing-drying integrated machines adopt an internal circulation mode, which makes the water vapor still circulate between a drying channel and the outer cylinder. Moreover, dehumidification of the washing-drying integrated machine mainly relies on a condensation device of the drying system. Therefore, if the residual water in the outer cylinder and the window gasket is to be further removed after a drying program is completed, all devices of the drying system have to remain in operation for a very long duration, which will seriously increase energy consumption of the washing-drying integrated machine and is very unfavorable for energy saving.

Accordingly, there is a need for a new washing-drying integrated apparatus in the art to solve the above problem.

### SUMMARY OF THE INVENTION

In order to solve the above problem in the prior art, that is, to solve the problem of high energy consumption and poor effect of the existing washing-drying integrated apparatuses in removing residual water from the outer cylinder, the present invention provides a washing-drying integrated apparatus as defined in the set of appended claims.

In the preferred technical solutions of the present invention, when the vent is closed by the air guide member, the drying channel can be isolated from the outside, and the washing-drying integrated apparatus can perform normal drying on the clothing. When the vent is opened by the air guide member, the drying channel is communicated with the outside through the ventilation branch, and external air can enter the drying channel, that is, the interior of the cylinder assembly is air-dried, and moist air inside the cylinder assembly can also be discharged to the outside, which is advantageous for rapid air-drying and discharging of the water vapor, thus avoiding bacteria growth due to residual water inside the cylinder assembly. At the same time, the air guide member not only can prevent external dust and the like from entering the cylinder assembly, but also can prevent foam from overflowing out of the washing-drying integrated apparatus during the washing process of the washing-drying integrated apparatus. Moreover, during the air-drying process, it is only necessary to turn on the fan of the drying system, and both the dehumidification device and heating device of the drying system do not require to operate and will not consume too much energy. On the basis of achieving air-drying of the cylinder assembly, air-drying efficiency is also improved, which is meanwhile advantageous for energy saving.

Further, the driving motor is used to drive the air guide plate to rotate, that is, a rotational driving mode is adopted; this arrangement can minimize the space that the air guide member has to occupy, which is more advantageous for the layout design of the overall spatial structure of the washing-drying integrated apparatus. Moreover, the structure is simple and the manufacture is easy.

Further, the ventilation area of the vent is larger than the air inflow area of the air inlet, meaning that when the washing-drying integrated apparatus executes the air-drying program, not only moist air can be discharged from the vent, but also external air can enter the cylinder assembly more easily from the vent, which is advantageous for keeping the balance of internal and external air pressures.

Further, the outlet of the drying channel is communicated with the window gasket, and the inlet of the drying channel is communicated with the outer cylinder, so that external air can enter from the window gasket. The window gasket is air-dried first, then the outer cylinder is air-dried, and finally the moist air is discharged through the ventilation branch, allowing both the outer cylinder and the window gasket to be air-dried at the same time, avoiding odor generation caused by the user forgetting to take out the clothing, and also avoiding secondary pollution caused when the user performs secondary cleaning of the clothing, which would otherwise affect the user experience in use.

Further, the outlet of the drying channel is arranged on the window gasket in the tangential direction, which can ensure that external air enters the window gasket in the tangential direction, so as to form a circular airflow inside the window gasket, which is advantageous for air-drying the window gasket without dead corners and improving the effect of air-drying.

### BRIEF DESCRIPTION OF DRAWINGS

Preferred solutions of the present invention will be described below with reference to the accompanying drawings and in connection with a drum type washing-drying integrated machine. In the drawings:
FIG. 1 is a first schematic structural view of the drum type washing-drying integrated machine of the present invention;
FIG. 2 is a second schematic structural view of the drum type washing-drying integrated machine of the present invention; and
FIG. 3 is a schematic structural view of the air guide assembly of the present invention.

### DETAILED DESCRIPTION OF EMBODIMENT(S) OF THE INVENTION

First, it should be understood by those skilled in the art that these embodiments are only used to explain the technical principle of the present invention, and are not intended to limit the scope of protection of the present invention. For example, although the present invention is described in connection with a drum type washing-drying integrated machine, the technical principle of the present invention is obviously also applicable to other types of washing-drying integrated machines, or a complex clothing treatment apparatus, etc. Such adjustments or changes to the application object do not constitute limitations to the present invention, and should all be defined within the scope of protection of the present invention.

It should be noted that in the description of the present invention, terms indicating directional or positional relationships, such as "middle", "front", "rear", "top", "bottom", "horizontally", "inner", "outer" and the like, are based on the directional or positional relationships shown in the accompanying drawings. They are only used for ease of description, and do not indicate or imply that the device or element must have a specific orientation, or be constructed or operated in a specific orientation; therefore, they should not be considered as limitations to the present invention.

In addition, it should also be noted that in the description of the present invention, unless otherwise clearly specified and defined, terms "arrange", "connect" and "communicate" should be understood in a broad sense; for example, the connection may be a fixed connection, or may also be a detachable connection, or an integral connection; it may be a direct connection, or an indirect connection implemented through an intermediate medium, or it may be internal communication between two elements. For those skilled in the art, the specific meaning of the above terms in the present invention can be interpreted according to specific situations.

In view of the problem of high energy consumption and poor effect of the existing drum type washing-drying integrated machines in removing residual water from the outer cylinder pointed out in the "BACKGROUND OF THE INVENTION", the present invention provides a drum type washing-drying integrated machine, which aims to dry the clothing normally and air-dry the interior of the cylinder assembly, thus avoiding bacteria growth due to residual water inside the cylinder assembly, and at the same time preventing external dust and the like from entering the cylinder assembly and preventing foam from overflowing out of the drum type washing-drying integrated machine. There will not be too much energy consumption, and on the basis of achieving air-drying of the cylinder assembly, air-drying efficiency is also improved, which is meanwhile advantageous for energy saving.

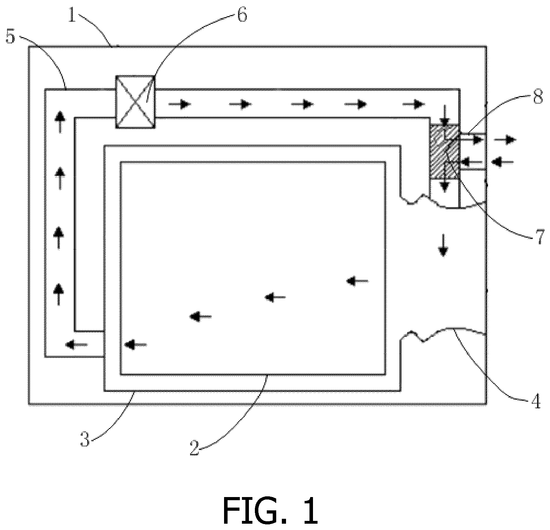

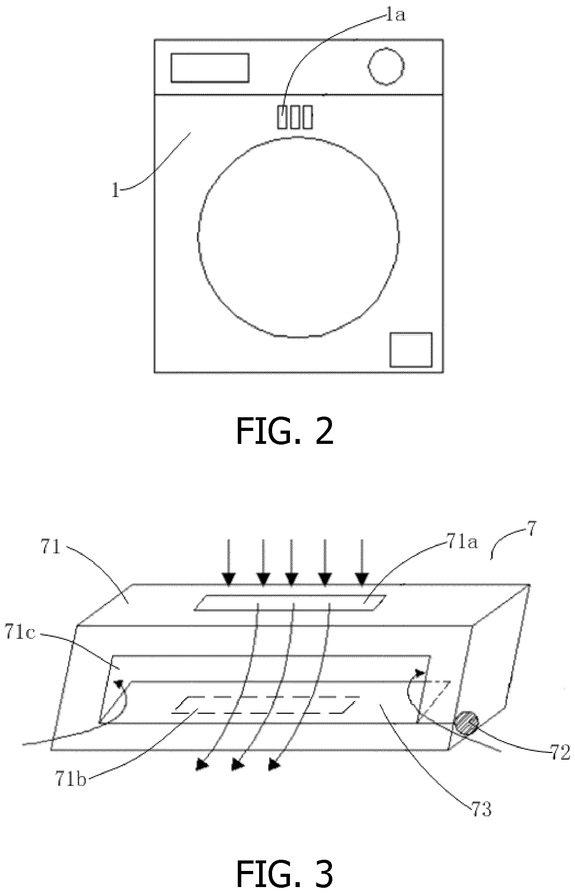

Specifically, as shown in FIGS. 1 and 2, the drum type washing-drying integrated machine of the present invention includes a cabinet 1 and a cylinder assembly arranged inside the cabinet 1. The cylinder assembly includes an inner cylinder 2, an outer cylinder 3, and a window gasket 4. The inner cylinder 2 is rotatably arranged in the outer cylinder 3, and the window gasket 4 connects an opening of the outer cylinder 3 to a door opening of the cabinet 1. In a top-loaded drum type washing-drying integrated machine, the outer cylinder 3 and the inner cylinder 2 are coaxial and both horizontally arranged, and the window gasket 4 connects an upper opening of the outer cylinder 3 to the door opening at the top of the cabinet 1. In a front-loaded drum type washing-drying integrated machine, the outer cylinder 3 and the inner cylinder 2 are coaxial and both horizontally arranged, and the window gasket 4 connects a front opening of the outer cylinder 3 to the door opening at the front of the cabinet 1. FIG. 1 shows a schematic structural view of the front-loaded drum type washing-drying integrated machine. It can be understood by those skilled in the art that the inner cylinder 2 can be directly driven to rotate by a direct driving motor, and can also be driven to rotate by a belt, which is driven by a motor. The outer cylinder 3 is used to hold washing water, the inner cylinder 2 is used to turn over the clothing, and the window gasket 4 ensures the sealing between the outer cylinder 3 and the cabinet 1.

With continued reference to FIG. 1, the drum type washing-drying integrated machine of the present invention also includes a drying system. The drying system includes a drying channel 5 communicated with the outer cylinder 3, and a fan 6 arranged inside the drying channel 5. The drying channel 5 and the outer cylinder 3 together form a circulating air path, and the drying channel 5 is also provided therein with a dehumidification device and a heating device (not shown). In a flow direction of air in the drying channel 5, the dehumidification device is arranged on an upstream side of the heating device. When the drum type washing-drying integrated machine executes the drying program, the fan 6 is turned on, so that air circulates between the drying channel 5 and the outer cylinder 3. Specifically, the moist air in the outer cylinder 3 enters the drying channel 5 and first passes through the dehumidification device for dehumidification, so that the moist air becomes relatively dry low-temperature air. Then, the relatively dry low-temperature air passes through the heating device for heating, so that the relatively dry low-temperature air becomes dry high-temperature air, which finally circulates back into the outer cylinder 3. The dry high-temperature air continues to dry the clothing, and the air passing through the clothing becomes moist air again, which enters the drying channel 5.

In the above description, the drying system can be a heat pump drying system, in which the dehumidification device is an evaporator and the heating device is a condenser. In addition, the heat pump drying system also includes a compressor. The evaporator, the condenser, and the compressor are sequentially connected end to end to form a refrigerant circulation circuit. The evaporator can dehumidify the air, and the condenser can heat the air. When the drum type washing-drying integrated machine executes the drying program, the fan 6, the evaporator, the condenser and the compressor work in cooperation to complete the drying operation on the clothing. The compressor is preferably located on the outside of the drying channel 5 to avoid the influence of water vapor in the air on the operation of the compressor. Of course, the drying system can also be a condensing drying system, in which the dehumidification device is a condensing fin, and the heating device is a heating pipe or an electric heating wire, etc. The condensing fin can dehumidify the air, and the heating pipe or electric heating wire can heat the air. When the drum type washing-drying integrated machine executes the drying program, taking the heating device being the electric heating pipe as an example, the fan 6, the condensing fin and the electric heating pipe work in cooperation to complete the drying operation on the clothing. A power supply end of the electric heating pipe is preferably located on the outside of the drying channel 5 to avoid the influence of water vapor in the drying channel 5 on the operation of the electric heating pipe, which would otherwise cause safety hazards.

In the present invention, a condensed water collection device can be arranged below the dehumidification device. For example, the condensed water collection device can be a condensed water tank formed in the cabinet 1 or on a base of the cabinet 1, or a separate condensed water collection box, etc. The fan 6 can be arranged on an upstream side of the dehumidification device, or between the dehumidification device and the heating device, or on a downstream side of the heating device. Such adjustments or changes to the specific arrangement position of the fan 6 do not constitute limitations to the present invention, and should all be defined within the scope of protection of the present invention.

It should be noted that the conventional program of the drum type washing-drying integrated machine includes washing, rinsing, spinning, draining and drying processes. In some drum type washing-drying integrated machines, the spinning process may be omitted, or the drying process may be omitted due to the material of the clothing being unsuitable for drying. Such adjustments or changes to the conventional program of the drum type washing-drying integrated machine do not constitute limitations to the present invention, and should all be defined within the scope of protection of the present invention. A large amount of foam will be generated during the washing process due to the presence of detergent/washing powder, and after the draining process is completed, there will be residual water on both an inner surface of the outer cylinder 3 and an inner surface of the window gasket 4.

As shown in FIGS. 1 and 3, the drum type washing-drying integrated machine of the present invention further includes an air guide assembly 7, and a ventilation branch 8 communicated with the outside is arranged on the drying channel 5 in a bypassing manner. The air guide assembly 7 includes a shell 71 arranged where the drying channel 5 and the ventilation branch 8 are communicated, and an air guide member at least partially arranged inside the shell 71. The shell 71 is formed with an air inlet 71a and an air outlet 71b that are communicated with the drying channel 5, and a vent 71c communicated with the ventilation branch 8. The air guide member is arranged to be capable of selectively closing the vent 71c. When the drum type washing-drying integrated machine executes the drying program, the vent 71c is closed by the air guide member, that is, only the air inlet 71a and the air outlet 71b of the shell 71 allow air to flow. After the fan 6 is turned on, the air in the drying channel 5 enters the shell 71 through the air inlet 71a of the shell 71, and then returns to the drying channel 5 through the air outlet 71b of the shell 71. Since the vent 71c of the shell 71 is closed by the air guide member, the air in the drying channel 5 will not flow to the ventilation branch 8, that is, the drying channel 5 is not communicated with the outside, thus avoiding leakage of drying gas to affect the normal drying process. When the drum type washing-drying integrated machine executes the air-drying program, the vent 71c is opened by the air guide member, so that the drying channel 5 is communicated with the ventilation branch 8, that is, the air inlet 71a, the air outlet 71b and the vent 71c of the shell 71 are all communicated with each other, that is, the air inlet 71a, the air outlet 71b and the vent 71c of the shell 71 all allow air to flow, and the drying channel 5 is communicated with the outside through the ventilation branch 8. After the fan 6 is turned on, the air inside the drying channel 5 enters the shell 71 through the air inlet 71a of the shell 71; then, a portion of the air inside the shell 71 passes through the vent 71c and the ventilation branch 8 in sequence so as to be discharged to the outside, and another portion of the air passes through the air outlet 71b again to return to the drying channel 5. In order to achieve balance of air pressures inside and outside the outer cylinder 3, the external air also enters the drying channel 5 through the ventilation branch 8 and the vent 71c, thereby achieving air exchange. In this way, the external air can also exchange with the air inside the outer cylinder 3, thereby achieving the purpose of air-drying. In a preferred situation, a ventilation area of the vent 71c is larger than an air inflow area of the air inlet 71a, so that the convection phenomenon at the vent 71c is reduced, which is more advantageous for air exchange at the vent 71c. For example, in the structure shown in FIG. 3, from the perspective of airflow, the air inlet 71a corresponds to a middle area of the vent 71c, while a non-middle area of the vent 71c (i.e., a peripheral area around the middle area) does not correspond to the air inlet 71a. When air enters the shell 71 through the air inlet 71a of the shell 71, a portion of the air inside the shell 71 will flow out from the middle area of the vent 71c, that is, it flows into the ventilation branch 8, and then is discharged to the outside. The external air will enter the shell 71 from the peripheral area around the middle area through the ventilation branch 8, and then flow back into the drying channel 5 from the air outlet 71b of the shell 71 together with another portion of the air inside the shell 71, thereby achieving air exchange. Through such an arrangement, air outflow of the vent 71c occurs at the middle area, while air inflow of the vent 71c occurs at the peripheral area around the middle area. The air inflow and air outflow almost do not form convection, ensuring smooth air exchange. It should be noted that the above shell 71 can be a separate component, that is, the shell 71 can be fixedly connected where the drying channel 5 and the ventilation branch 8 are communicated; alternatively, the shell 71 can also be a part of the drying channel 5, or a part of both the drying channel 5 and the ventilation branch 8, that is, the above shell 71 can be formed by an inner wall of the drying channel 5 and an inner wall of the ventilation branch 8. Such adjustments or changes to the specific structure of the shell 71 do not constitute limitations to the present invention, and should all be defined within the scope of protection of the present invention. In the present invention, when the drum type washing-drying integrated machine executes the air-drying program, the air-drying process can be achieved by simply turning on the fan 6 of the drying system, and the interior of the cylinder assembly can be air-dried without the dehumidification device and the heating device of the drying system also working in cooperation.

Preferably, the air guide member includes a driving motor 72 and an air guide plate 73; the driving motor 72 is arranged outside the shell 71, the air guide plate 73 is arranged inside the shell 71, and an output shaft of the driving motor 72 is connected to the air guide plate 73, and can drive the air guide plate 73 to rotate to selectively close the vent 71c. The driving motor 72 can be directly connected to the air guide plate 73, or it can be connected to the air guide plate 73 through a gear pair structure. For example, the driving motor 72 is first connected to a small gear, and then the small gear meshes with a large gear. The large gear is then connected to the air guide plate 73, and the gear pair has a deceleration effect due to the diameter difference between the small gear and the large gear, thereby achieving stable rotation of the air guide plate 73. A rotation axis of the air guide plate 73 can be located at the edge of the vent 71c. In this case, the driving motor 72 is directly or indirectly connected to the edge of the air guide plate 73, and then the vent 71c can be opened or closed by swinging the air guide plate 73. Of course, the rotation axis of the air guide plate 73 can also be located in the middle of the vent 71c. In this case, the driving motor 72 is directly or indirectly connected to the middle of the air guide plate 73, and then the vent 71c can be opened or closed by rotating the air guide plate 73. That is, when the air guide plate 73 is opened, a part of the air guide plate 73 will open a part of the vent 71c, and the other part of the air guide plate 73 will open the other part of the vent 71c, thus fully opening the vent 71c. This also applies to the closing of the vent 71c. When the air guide plate 73 is closed, a part of the air guide plate 73 will close a part of the vent 71c, and the other part of the air guide plate 73 will close the other part of the vent 71c, thereby fully closing the vent 71c. Further preferably, a side of the air guide plate 73 that is close to the vent 71c is provided with a sealing gasket. When the vent 71c is covered by the air guide plate 73, the sealing gasket can seal the vent 71c, preventing the external dust from entering the drying channel 5, and also preventing the foam from overflowing out of the cabinet 1 when the washing-drying integrated machine of the present invention is washing. In other examples, the sealing gasket on the air guide plate 73 can be replaced with a sealing ring that corresponds to the shape of the vent 71c.

In addition, in the above, the air guide plate 73 can also be manually adjusted, that is, the driving motor 72 can be replaced with a rocking handle, and the rotation of the air guide plate 73 can be controlled by swaying the rocking handle. The driving motor 72 can also be a linear motor; in this case, the air guide plate 73 can be replaced with a structure of an air guide insert or air guide block, that is, the opening and closing of the vent 71c is achieved through sliding. Those skilled in the art can flexibly set the structure of the air guide member.

It should be noted that the arrangement positions of the air inlet 71a, the air outlet 71b and the vent 71c can be flexibly set. If the ventilation branch 8 is arranged on a straight section of the drying channel 5, then the air inlet 71a and the air outlet 71b are preferably located on opposite sides of the shell 71, and the vent 71c is located on the adjacent side of the air inlet 71a and the air outlet 71b. If the ventilation branch 8 is arranged on a turning section of the drying channel 5, then the air inlet 71a and the air outlet 71b are preferably located on adjacent sides of the shell 71, and the vent 71c is located on the opposite side of the air inlet 71a or the opposite side of the air outlet 71b. For example, in the structure shown in FIG. 3, the air inlet 71a is located on a top side of the shell 71, the air outlet 71b is located on a bottom side of the shell 71, and the vent 71c is located on a front side of the shell 71. Moreover, in the flow direction of air in the drying channel 5, the fan 6 can be located on an upstream side of the shell 71, or on a downstream side of the shell 71.

Preferably, as shown in FIG. 2, an opening 1a communicated with the outside is arranged on a front panel of the cabinet of the drum type washing-drying integrated machine of the present invention. Then, the ventilation branch 8 is communicated with the opening 1a, that is, moist air can be discharged to the outside through the opening 1a on the front panel. In other examples, the outlet of the ventilation branch 8 can also directly pass out of the opening 1a, that is, the opening 1a is only used as an installation port of the ventilation branch 8, and the moist air is directly discharged to the outside through the outlet of the ventilation branch 8. In a case where the moist air is led out to the outside through the opening 1a on the front panel of the cabinet, a decorative cover can be arranged on the opening 1a, and the decorative cover can be configured into a grid-like structure or a hidden structure. In other examples, the opening 1a is not limited to being arranged on the front panel of the cabinet, and it can also be arranged on a left-side panel or a right-side panel, or can even be arranged on a control panel, or on a console where a display screen is installed. Such adjustments or changes to the specific arrangement position of the opening 1a should all be defined within the scope of protection of the present invention.

Preferably, the outlet of the drying channel 5 is communicated with the window gasket 4, and the inlet of the drying channel 5 is communicated with the outer cylinder 3. Further, the outlet of the drying channel 5 is preferably communicated with the top of the window gasket 4, and the inlet of the drying channel 5 is preferably communicated with the rear of the outer cylinder 3, thus also facilitating the increase of air-drying area of the outer cylinder 3 while ensuring the drying effect on the clothing. In addition, the outlet of the drying channel 5 is arranged on the window gasket 4 in the tangential direction. Through such an arrangement, the wind entering the window gasket 4 from the drying channel 5 comes from the tangential direction, so that a circular airflow can be formed in the window gasket 4, thereby achieving air-drying of the window gasket 4. Moreover, the outlet is preferably arranged at a wrinkle part of the window gasket 4, so as to air-dry the wrinkle part of the window gasket 4. The drying channel 5 can also form multiple branches; for example, multiple branches are formed in an outlet section of the drying channel 5 of the drum type washing-drying integrated machine shown in FIG. 1. Outlets of the multiple branches are respectively communicated with multiple communication ports located on the window gasket 4, and the branches correspond to the communication ports in a one-to-one correspondence. The multiple communication ports are arranged at equal or unequal intervals in a circumferential direction of the window gasket 4, and each communication port is arranged in the same tangential direction on the window gasket 4. Being arranged in the same tangential direction mentioned above means that when viewed right in front of the window gasket 4 (that is, a circular structure of the window gasket 4 can just be seen), all the communication ports are oriented in a clockwise tangential direction of the circumference of the window gasket 4 or in a counterclockwise tangential direction of the circumference of the window gasket 4, so that a clockwise or counterclockwise circular airflow is formed inside the window gasket 4, thus air-drying various parts of the window gasket 4 without dead corners, and further improving the air-drying effect.

## Claims

1. A washing-drying integrated apparatus, wherein the washing-drying integrated apparatus comprises a cylinder assembly, a drying channel (5), an air guide assembly (7) and a fan (6); the fan (6) is arranged inside the drying channel (5), and the drying channel (5) is communicated with the cylinder assembly and forms a circulating air path together with the cylinder assembly; a ventilation branch (8) communicated with the outside of the washing-drying integrated apparatus is arranged on the drying channel (5) in a bypassing manner,
wherein an opening (1a) is arranged on a front panel of a cabinet (1) of the washing-drying integrated apparatus, and the ventilation branch (8) is communicated with the opening (1a); and
wherein the washing-drying integrated apparatus is configured to be able to operate in a drying program and in an air-drying program;
**characterized in that** the air guide assembly (7) comprises a shell (71) arranged where the drying channel (5) and the ventilation branch (8) are communicated, and an air guide member at least partially arranged inside the shell (71); the shell (71) is formed with an air inlet (71a) and an air outlet (71b) that are communicated with the drying channel (5), and a vent (71c) communicated with the ventilation branch (8),
wherein in the drying program, the vent (71c) is closed by the air guide member, and air in the drying channel (5) enters the shell (71) through the air inlet (71a) of the shell (71) and then returns to the drying channel (5) through the air outlet (71b) of the shell (71); and
wherein in the air-drying program, the vent (71c) is opened by the air guide member, the air inlet (71a), the air outlet (71b), and the vent (71c) are all communicated with each other, and the drying channel (5) is communicated with the ventilation branch (8).

2. The washing-drying integrated apparatus according to claim 1, wherein the air guide member comprises a driving motor (72) and an air guide plate (73), the driving motor (72) is arranged outside the shell (71), the air guide plate (73) is arranged inside the shell (71), and an output shaft of the driving motor (72) is connected to the air guide plate (73) and can drive the air guide plate (73) to rotate to selectively close the vent (71c).

3. The washing-drying integrated apparatus according to claim 1, wherein a ventilation area of the vent (71c) is larger than an air inflow area of the air inlet (71a).

4. The washing-drying integrated apparatus according to claim 1, wherein the fan (6) is located on an upstream side of the shell (71) in a flow direction of air in the drying channel (5).

5. The washing-drying integrated apparatus according to claim 1, wherein the air inlet(71a) is located on a top side of the shell (71), the air outlet (71b) is located on a bottom side of the shell (71), and the vent (71c) is located on a front side of the shell (71).

6. The washing-drying integrated apparatus according to any one of claims 1 to 5, wherein the cylinder assembly comprises an outer cylinder (3) and a window gasket (4) that are connected, an outlet of the drying channel (5) is communicated with the window gasket (4), and an inlet of the drying channel (5) is communicated with the outer cylinder (3).

7. The washing-drying integrated apparatus according to claim 6, wherein the outlet of the drying channel (5) is communicated with a top of the window gasket (4).

8. The washing-drying integrated apparatus according to claim 6, wherein the inlet of the drying channel (5) is communicated with a rear of the outer cylinder (3).

9. The washing-drying integrated apparatus according to claim 6, wherein the outlet of the drying channel (5) is arranged on the window gasket (4) in a tangential direction.

## Patentansprüche

1. Integrierte Wasch-Trocknungseinrichtung, wobei die integrierte Wasch-Trocknungseinrichtung einen Zylinder, eine Zylinderanordnung, einen Trocknungskanal (5), eine Luftführungsanordnung (7) und einen Lüfter (6) umfasst; der Lüfter (6) innerhalb des Trocknungskanals (5) eingerichtet ist, und der Trocknungskanal (5) mit der Zylinderanordnung in Verbindung steht und einen zirkulierenden Luftweg gemeinsam mit der Zylinderanordnung bildet; ein Belüftungszweig (8), der mit der Außenseite der integrierten Wasch-Trocknungseinrichtung in Verbindung steht an dem Trocknungskanal (5) in einer umgebenden Art und Weise eingerichtet ist, wobei eine Öffnung (1a) an einer Frontplatte eines Schranks (1) der integrierten Wasch-Trocknungseinrichtung eingerichtet ist, und der Belüftungszweig (8) mit der Öffnung (1a) in Verbindung steht; und wobei die integrierte Wasch-Trocknungseinrichtung dazu konfiguriert ist, in der Lage zu sein, in einem Trocknungsprogramm und in einem Lufttrocknungsprogramm zu arbeiten; **dadurch gekennzeichnet, dass** die Luftführungsanordnung (7) eine Hülle (71) umfasst, die dort eingerichtet ist, wo der Trocknungskanal (5) und der Belüftungszweig (8) in Verbindung stehen, und ein Luftführungselement, das mindestens teilweise innerhalb der Hülle (71) eingerichtet ist; die Hülle (71) mit einem Lufteinlass (71a) und einem Luftauslass (71b) gebildet ist, die mit dem Trocknungskanal (5) in Verbindung stehen, und eine Entlüftung (71c), die mit dem Belüftungszweig (8) in Verbindung steht, wobei in dem Trocknungsprogramm die Entlüftung (71c) durch das Luftführungselement verschlossen wird, und Luft in dem Trocknungskanal (5) in die Hülle (71) durch den Lufteinlass (71a) der Hülle (71) eintritt und zu dem Trocknungskanal (5) durch den Luftauslass (71b) der Hülle (71) zurückkehrt; und wobei in dem Lufttrocknungsprogramm die Entlüftung (71c) von dem Luftführungselement geöffnet wird, der Lufteinlass (71a), der Luftauslass (71b) und die Entlüftung (71c) alle miteinander in Verbindung stehen, und der Trocknungskanal (5) mit dem Belüftungszweig (8) in Verbindung steht.

2. Integrierte Wasch-Trocknungseinrichtung nach Anspruch 1, wobei das Luftführungselement einen Antriebsmotor (72) und ein Luftleitblech (73) umfasst, der Antriebsmotor (72) außerhalb der Hülle (71) eingerichtet ist, das Luftleitblech (73) innerhalb
der Hülle (71) eingerichtet ist, und eine Ausgangswelle des Antriebsmotors (72) mit dem Luftleitblech (73) verbunden ist und das Luftleitblech (73) zum Drehen antreiben kann, um die Entlüftung (71c) selektiv zu schließen.

3. Integrierte Wasch-Trocknungseinrichtung nach Anspruch 1, wobei ein Belüftungsbereich der Entlüftung (71c) größer als ein Lufteinströmbereich des Lufteinlasses (71a) ist.

4. Integrierte Wasch-Trocknungseinrichtung nach Anspruch 1, wobei sich der Lüfter (6) an einer stromaufwärtigen Seite der Hülle (71) in einer Luftströmungsrichtung in dem Trocknungskanal (5) befindet.

5. Integrierte Wasch-Trocknungseinrichtung nach Anspruch 1, wobei der Lufteinlass (71a) an einer Oberseite der Hülle (71) eingerichtet ist, der Luftauslass (71b) an einer Unterseite der Hülle (71) eingerichtet ist und die Entlüftung (71c) an einer Vorderseite der Hülle (71) eingerichtet ist.

6. Integrierte Wasch-Trocknungseinrichtung nach einem der Ansprüche 1 bis 5, wobei die Zylinderanordnung einen Außenzylinder (3) und eine Fensterdichtung (4) umfasst, die verbunden sind, ein Auslass des Trocknungskanals (5) mit der Fensterdichtung (4) in Verbindung steht und ein Einlass des Trocknungskanals (5) mit dem Außenzylinder (3) in Verbindung steht.

7. Integrierte Wasch-Trocknungseinrichtung nach Anspruch 6, wobei der Auslass des Trocknungskanals (5) mit einer Oberseite der Fensterdichtung (4) in Verbindung steht.

8. Integrierte Wasch-Trocknungseinrichtung nach Anspruch 6, wobei der Einlass des Trocknungskanals (5) mit einer Rückseite des Außenzylinders (3) in Verbindung steht.

9. Integrierte Wasch-Trocknungseinrichtung nach Anspruch 6, wobei der Auslass des Trocknungskanals (5) in einer tangentialen Richtung an der Fensterdichtung (4) eingerichtet ist.

## Revendications

1. Appareil intégré de lavage-séchage, dans lequel l'appareil intégré de lavage-séchage comprend un ensemble cylindre, un canal de séchage (5), un ensemble de guidage d'air (7) et un ventilateur (6) ; le ventilateur (6) est agencé à l'intérieur du canal de séchage (5), et le canal de séchage (5) est en communication avec l'ensemble cylindre et forme un trajet d'air de circulation conjointement avec l'ensemble cylindre ; une branche de ventilation (8) en communication avec l'extérieur de l'appareil intégré de lavage-séchage est agencée sur le canal de séchage (5) de manière contournée, dans lequel une ouverture (1a) est agencée sur un panneau avant d'un caisson (1) de l'appareil intégré de lavage-séchage, et la branche de ventilation (8) est en communication avec l'ouverture (1a) ; et dans lequel l'appareil intégré de lavage-séchage est configuré pour pouvoir fonctionner dans un programme de séchage et dans un programme de séchage à l'air ; **caractérisé en ce que** l'ensemble de guidage d'air (7) comprend une enveloppe (71) agencée à l'endroit où le canal de séchage (5) et la branche de ventilation (8) sont en communication, et un élément de guidage d'air au moins partiellement agencé à l'intérieur de l'enveloppe (71) ; l'enveloppe (71) est formée avec une entrée d'air (71a) et une sortie d'air (71b) qui sont en communication avec le canal de séchage (5), et un trou d'aération (71c) en communication avec la branche de ventilation (8), dans lequel, dans le programme de séchage, le trou d'aération (71c) est fermé par l'élément de guidage d'air, et de l'air dans le canal de séchage (5) pénètre dans l'enveloppe (71) à travers l'entrée d'air (71a) de l'enveloppe (71), puis retourne au canal de séchage (5) à travers la sortie d'air (71b) de l'enveloppe (71) ; et dans lequel, dans le programme de séchage à l'air, le trou d'aération (71c) est ouvert par l'élément de guidage d'air, l'entrée d'air (71a), la sortie d'air (71b), et le trou d'aération (71c) sont tous en communication les uns avec les autres, et le canal de séchage (5) est en communication avec la branche de ventilation (8).

2. Appareil intégré de lavage-séchage selon la revendication 1, dans lequel l'élément de guidage d'air comprend un moteur d'entraînement (72) et une plaque de guidage d'air (73), le moteur d'entraînement (72) est agencé à l'extérieur de l'enveloppe (71), la plaque de guidage d'air (73) est agencée à l'intérieur de l'enveloppe (71), et un arbre de sortie du moteur d'entraînement (72) est relié à la plaque de guidage d'air (73) et peut entraîner la plaque de guidage d'air (73) pour qu'elle tourne afin de fermer sélectivement le trou d'aération (71c).

3. Appareil intégré de lavage-séchage selon la revendication 1, dans lequel une zone de ventilation du trou d'aération (71c) est plus grande qu'une zone d'entrée d'air de l'entrée d'air (71a).

4. Appareil intégré de lavage-séchage selon la revendication 1, dans lequel le ventilateur (6) est situé sur un côté amont de l'enveloppe (71) dans une direction d'écoulement d'air dans le canal de séchage (5).

5. Appareil intégré de lavage-séchage selon la revendication 1, dans lequel l'entrée d'air (71a) est située sur un côté supérieur de l'enveloppe (71), la sortie d'air (71b) est située sur un côté inférieur de l'enveloppe (71), et le trou d'aération (71c) est situé sur un côté avant de l'enveloppe (71).

6. Appareil intégré de lavage-séchage selon l'une quelconque des revendications 1 à 5, dans lequel l'ensemble cylindre comprend un cylindre externe (3) et un joint de hublot (4) qui sont reliés, une sortie du canal de séchage (5) est en communication avec le joint de hublot (4), et une entrée du canal de séchage (5) est en communication avec le cylindre externe (3).

7. Appareil intégré de lavage-séchage selon la revendication 6, dans lequel la sortie du canal de séchage (5) est en communication avec une partie supérieure du joint de hublot (4).

8. Appareil intégré de lavage-séchage selon la revendication 6, dans lequel l'entrée du canal de séchage (5) est en communication avec une partie arrière du cylindre externe (3).

9. Appareil intégré de lavage-séchage selon la revendication 6, dans lequel la sortie du canal de séchage (5) est agencée sur le joint de hublot (4) dans une direction tangentielle.
